# EUROPÄISCHE PATENTSCHRIFT

(11) **EP 3 356 731 B1**
(45) Veröffentlichungstag und Bekanntmachung des Hinweises auf die Patenterteilung: **29.01.2020**
(21) Anmeldenummer: 16763189.4
(22) Anmeldetag: 24.08.2016
(51) Int. Cl.: F21V 7/04, F21V 7/00, F21V 13/02, F21V 5/04, G02B 19/00

(54) **LEUCHTENOPTIK**
OPTICAL LIGHTING UNIT
OPTIQUE D'ÉCLAIRAGE

(30) Priorität: 02.10.2015 DE 102015219117
(43) Veröffentlichungstag der Anmeldung: 08.08.2018
(73) Patentinhaber: Zumtobel Lighting GmbH, 6850 Dornbirn (AT)
(72) Erfinder: EBNER, Stephan, 6850 Dornbirn (AT)
(74) Vertreter: Kiwit, Benedikt
(86) Internationale Anmeldenummer: PCT/AT2016/060040
(87) Internationale Veröffentlichungsnummer: WO 2017/054022

(56) Entgegenhaltungen:
- EP-A2- 2 518 396
- US-A- 5 810 469
- US-A1- 2014 126 234

## Beschreibung

Die folgende Offenbarung betrifft eine erfindungsgemäße Leuchtenoptik zur gerichteten Lichtabgabe sowie ein Leuchtenoptiksystem aufweisend wenigstens zwei erfindungsgemäße Leuchtenoptiken und ferner eine Leuchte mit erfindungsgemäßer Leuchtenoptik oder dem Leuchtenoptiksystem.

Aus dem Stand der Technik sind unterschiedliche optische Elemente bekannt, um ein optisches System mit möglichst geringer Strahldivergenz, also einem möglichst kleinen Öffnungswinkel und geringem Streulichtanteil, bereitzustellen. Anwendungsbereiche sind beispielsweise Strahler, Spots, Fahrradleuchten, Scheinwerfer und dergleichen.

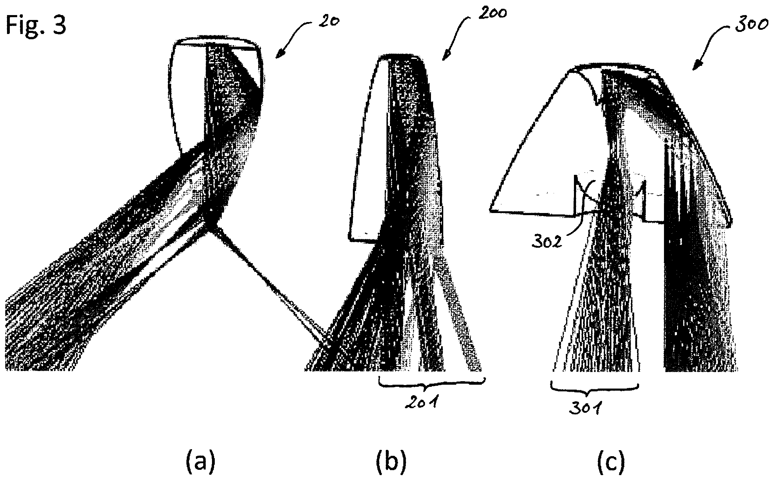

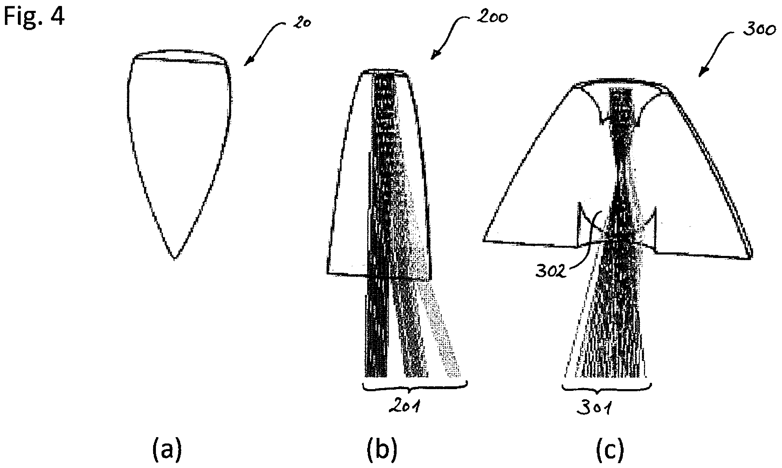

Es sind aus dem Stand der Technik unterschiedliche Vorsatzoptiken in verschiedenen Ausprägungen bekannt, wie beispielsweise Reflektoren oder TIR-Linsen 300 (vgl. Figuren 3c und 4c). Auch sind optische Systeme bekannt, in denen die optischen Komponenten in mehreren Stufen hintereinander angeordnet sind; vgl. hierzu beispielsweise die DE 10 2010 039 306 A1. Im Strahlerbereich werden neben Linsen für viele Anwendungen oft auch Blenden zur Streulichtreduktion als optische Komponenten eingesetzt. Letzeres beispielsweise im Bereich von Projektoren.

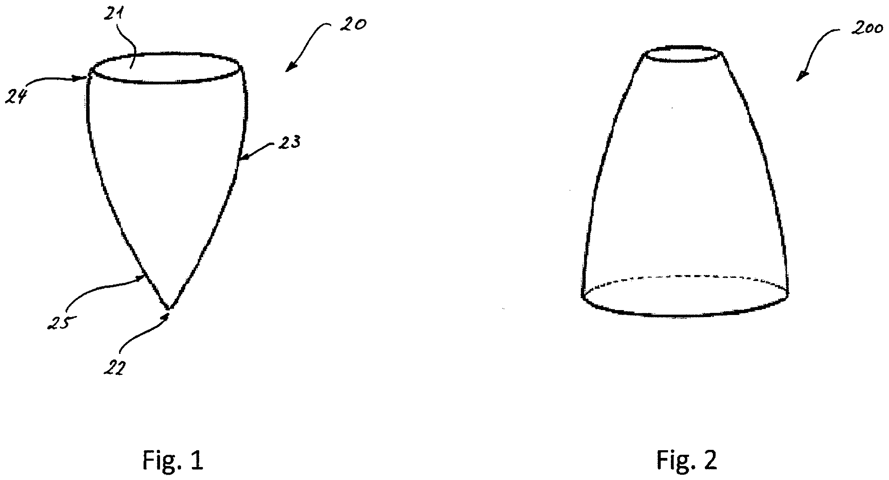

Eine spezielle Form der Lichtkonzentratoren ist beispielsweise auch aus dem Solarbereich bekannt. Dort werden sogenannte CPC-Konzentratoren (CPC = Compound Parabolic Concentrator) 200 eingesetzt. Ein solcher ist beispielhaft in Figur 2 gezeigt. Mit Verweis auf die Figuren 3b und 4b ist ersichtlich, dass diese Optik 200 einen unkontrollierten Direktlichtanteil 201 aufweist, was eine gerichtete Lichtabgabe erschwert und zu einer vergleichsweise hohen Strahldivergenz führt. Des Weiteren ergeben sich störende koronaartige Ringe bzw. Abbildung um den zentralen Spot(-bereich) herum. Ähnliche Effekte ergeben sich bei den zuvor beschriebenen TIR-Linsen 300 (vgl. Figuren 3c und 4c).

Die US 2014/126234 A1 beschreibt eine Leuchte, die im Wesentlichen einen Lichtleiter, eine Lichtquelle und einen Reflektor umfasst. Das von der Lichtquelle nach oben hin emittierte Licht wird in den Lichtleiter eingekoppelt, zum Teil umgelenkt und trifft nach der Auskoppelung aus dem Lichtleiter auf den den Lichtleiter umschließenden Reflektor, der das Licht schließlich gerichtet abgibt.

Die US 5 810 469 A beschreibt unter anderem eine lichtbündelnde Kollimationsvorrichtung bestehend aus einem Lichtbündler, der in einen parabolischen Reflektor hineinragt. In den Lichtbündler eintretendes Licht wird zunächst gebündelt und über seitliche Öffnungen des Lichtbündlers ausgekoppelt. Der den Lichtbündler teilweise umgebende Reflektor gibt das Licht schließlich gerichtet an die Umgebung ab.

Die EP 2 518 396 A2 beschreibt eine Anordnung zur Lichtabgabe, die im Wesentlichen ein Lichtabgabeelement, ein LED-Leuchtmittel und einen Reflektor umfasst. Das LED-Leuchtmittel emittiert Licht in das Lichtabgabeelement, das das Licht wiederum innerhalb des Reflektors auskoppelt. Schließlich gibt der Reflektor das auf ihn treffende Licht gerichtet ab.

Es ist nunmehr eine Aufgabe der vorliegenden Erfindung, eine Leuchtenoptik mit besonders geringer Strahldivergenz bereitzustellen.

Diese Aufgabe wird durch den Gegenstand des Anspruchs 1 gelöst. Die abhängigen Ansprüche bilden den zentralen Gedanken der Erfindung in besonders vorteilhafter Weise weiter.

Gemäß einem ersten Aspekt betrifft die Offenbarung die erfindungsgemäße Leuchtenoptik gemäß Anspruch 1. Diese weist eine erste Optik und eine zweite Optik auf. Die erste Optik erstreckt sich von einem flächigen Bodenbereich weg zu einer Spitze hin. Bevorzugt ist dabei die erste Optik im Wesentlichen kegelförmig ausgebildet. Die den Bodenbereich mit der Spitze verbindenden Seitenflächen der ersten Optik sind bevorzugt rotationssymmetrisch ausgebildet, wobei die vorliegende Erfindung hierauf nicht beschränkt ist. Die zweite Optik weist wiederum eine Öffnung auf, in die die erste Optik wenigstens mit ihrer Spitze hineinragt. Die zweite Optik ist ferner derart ausgebildet, um von der ersten Optik (bevorzugt in die Öffnung) ausgekoppeltes Licht in der Öffnung einzukoppeln und gerichtet aus der zweiten Optik abzugeben, wobei ein Bodenbereich der zweiten Optik eine Ausnehmung, vorzugsweise eine zentrale Ausnehmung, aufweist, welche in einem für die Lichtabgabe nicht-wirksamen Bereich vorgesehen ist. Unter "Einkoppeln" wird gemäß der Erfindung verstanden, dass das Licht in die entsprechende Optik (hier die zweite Optik) eintritt bzw. in diese abgegeben wird. Dies umfasst die Einführung von Licht in eine Vollkörper-Optik.

Bei der ersten Optik handelt es sich um eine Art asphärischen Strahlteiler, dessen Oberfläche bevorzugt durch einen um die zentrale Achse rotierenden geneigten Kegelschnitt beschrieben werden kann; alternativ sind auch kreisbogenform oder beliebige Spline-Geometrien denkbar. Im Gegensatz zu den bekannten CPC-Konzentratoren ist bei der hier beschriebenen ersten Optik der Kegelschnitt, wie in Figur 1 zu sehen, zur Rotationsachse hin nach unten geneigt, so dass die Rotationsfläche idealerweise spitz zuläuft. Auf diese Weise kann bevorzugt alles in die erste Optik eingekoppelte Licht an der den Bodenbereichen mit der Spitze verbindenden Seitenflächen der ersten Optik umgelenkt werden; bevorzugt durch Totalreflektion an diesen Seitenflächen. Dieses umgelenkte Licht wird dann an den Gegenflächen ausgekoppelt und steht zur Einkopplung in die zweite Optik bereit, so dass ein direkter Lichtanteil - sprich ein Anteil von Licht, der nicht von der in Figur 1 gezeigten Kegelschnittfläche umgelenkt wird, sondern direkt vorne wieder austritt - vermieden wird (vgl. Figur 3a und insbesondere Figur 4a). In der zweiten Optik kann dann das gesamte Licht in gewünschter Weise zur gerichteten Lichtabgabe beeinflusst bzw. umgelenkt werden.

Auch eine bei klassischen TIR-Vorsatzlinsen 300 übliche Mittellinse 302, wie beispielsweise in den Figuren 3c und 4c gezeigt, entfällt, wodurch mögliche koronaartige Erscheinungen deutlich kontrollierbarer werden und bestenfalls sogar eliminiert werden können. In den Figuren 3c und 4c sind hierzu auch die Strahlengänge einer TIR-Linse 300 dargestellt, wobei in Figur 4c gezeigt ist, dass insbesondere bei verhältnismäßig großer Lichtquelle zur Optik das über die Mittellinse geführte (Direkt-)Licht 301 in problematischer Weise unkontrollierbar austreten kann und somit eine gerichtete Lichtabgabe erschwert ist.

Die erste Optik ist bevorzugt als Vollkörper gebildet und stellt, wie bereits zuvor beschrieben, insbesondere einen Strahlteiler dar. Die entsprechende Lichtlenkung der ersten Optik ist beispielhaft in Figur 3a gezeigt.

In einer bevorzugten Ausgestaltungsform weist der Bodenbereich der ersten Optik eine Lichteinkoppelfläche zum Einkoppeln von Licht in die erste Optik bzw. in die Leuchtenoptik oder das Leuchtensystem auf. Dabei sind die den Bodenbereich mit der Spitze verbindenden Seitenflächen der ersten Optik bevorzugt derart ausgebildet, dass vorzugsweise alles über den Bodenbereich der ersten Optik in diese eingekoppelte Licht an den Seitenflächen derart (total-)reflektiert wird, dass es an den gegenüberliegenden Seitenflächen der ersten Optik aus dieser ausgekoppelt wird. Wie bereits zuvor beschrieben, kann auf diese Weise ein vorbezeichneter direkter Lichtanteil vermieden werden.

Der Fokuspunkt der totalreflektierenden Seitenflächen liegt bevorzugt im Zentrum des Bodenbereichs als Lichteinkoppelfläche. Dabei liegt der Fokuspunkt der totalreflektierenden Seitenflächen bevorzugt innerhalb der ersten Optik oder auch außerhalb der ersten Optik. Besonders bevorzugt liegt der Fokuspunkt auf einer Rotationssymmetrieachse derselben. Es ist jedoch auch denkbar, dass er abseits der Rotationssymmetrieachse liegt. Die Lichtaufteilung durch die erste Optik funktioniert dann besonders gut, wenn der Fokuspunkt der totalreflektierenden Seitenflächen im Zentrum der Lichteintrittsfläche liegt. Bei entsprechenden parabolischen Außen- bzw. Seitenflächen kann dabei eine besonders hohe Divergenz des Strahlteilers (= erste Optik) erreicht werden. Es ist jedoch auch denkbar, plane Seitenflächen bereitzustellen. Wie gerade erwähnt, kann die erste Optik vom Bodenbereich zur Spitze hin verlaufend eine parabelförmige oder aber auch eine kreisbogenförmige oder eine sonstige kurvenförmige Außenkontur aufweisen. Je nach Außenkontur, die beispielsweise auch plan (also insgesamt kegelförmig) sein kann, kann die Divergenz der ersten Optik variiert werden.

Die den Bodenbereich mit der Spitze verbindenden Seitenflächen der ersten Optik können sich in einem Bereich nahe der Bodenfläche von der Bodenfläche zur Spitze hin aufweitend oder zylindrisch erstrecken. Auf diese Weise wird es ermöglicht, die erste Optik aus herstellungstechnischen Gründen einfach entformbar bereitzustellen. In einer bevorzugten Ausgestaltungsform bildet dann der sich aufweitende oder zylindrisch erstreckende Bereich einen für die Lichtlenkung bzw. optisch nicht-wirksamen Bereich. Das Licht ist dann in der Weise in die erste Optik einzukoppeln, dass möglichst kein Licht(-anteil) auf diesen nicht-wirksamen optischen Bereich fällt. Dies kann beispielsweise durch eine definierte Anordnung der Lichtquelle bzw. des Leuchtmittels geschehen, wie im Weiteren noch beschrieben wird.

Zwischen der Spitze der ersten Optik und dem die Öffnung begrenzenden Bereich der zweiten Optik ist bevorzugt ein Abstand bereitgestellt. Das Licht tritt also aus der ersten Optik aus und wird dann durch die Öffnung auf die zweite Optik geführt, wo es entsprechend eingekoppelt wird. Somit tritt das durch die erste Optik optimal bzw. definiert geteilte Licht in die zweite Optik der Leuchtenoptik ein, um dort für eine gerichtete Lichtabgabe bereitgestellt und umgelenkt zu werden. Da kein direkter Lichtanteil vorliegt, kann folglich bevorzugt das gesamte in die Leuchtenoptik eingekoppelte Licht entsprechend gerichtet umgelenkt werden und somit eine besonders geringe Strahldivergenz erzielt werden.

Die zweite Stufe der Leuchtenoptik, also die zweite Optik, ist nun vorgesehen, um das durch den Strahlteiler ,aufgefächerte' Licht in die gewünschte Richtung umzulenken. Als zweite Stufe eignen sich im einfachsten Fall klassische Reflektoren (nicht beansprucht), um das von der ersten Optik ausgekoppelte Licht gerichtet umzulenken. Auch sind beispielsweise bei anspruchsvolleren Aufgaben TIR-Optiken oder auch andere Optiken denkbar.

Erfindungsgemäß ist die zweite Optik als Vollkörper ausgebildet, wobei dieser Vollkörper mit einem Reflektor entsprechend verbunden werden kann, um in Kombination miteinander für die Umlenkung des in die zweite Optik eingekoppelten Lichts bereitzustehen.

Wie bereits erwähnt, ist die zweite Optik derart ausgebildet, um von der ersten Optik ausgekoppeltes Licht in der Öffnung einzukoppeln. Grundsätzlich ist eine Einkopplung eines Teils des Lichtes auch außerhalb der Öffnung denkbar, allerdings wird bei entsprechender Einkopplung allen Lichts über die Öffnung eine besonders effiziente Lichtausbeute erzielt.

Die zweite Optik ist bevorzugt derart ausgebildet, um das Licht mittels Reflexion oder Totalreflexion zur gerichteten Lichtabgabe aus der zweiten Optik umzulenken. Bei der Verwendung von entsprechenden Optiken, wie sie im Weiteren noch beschrieben werden (beispielsweise TIR-Optiken), ist auch eine Lichtumlenkung mittels Totalreflexion denkbar und sogar bevorzugt wünschenswert.

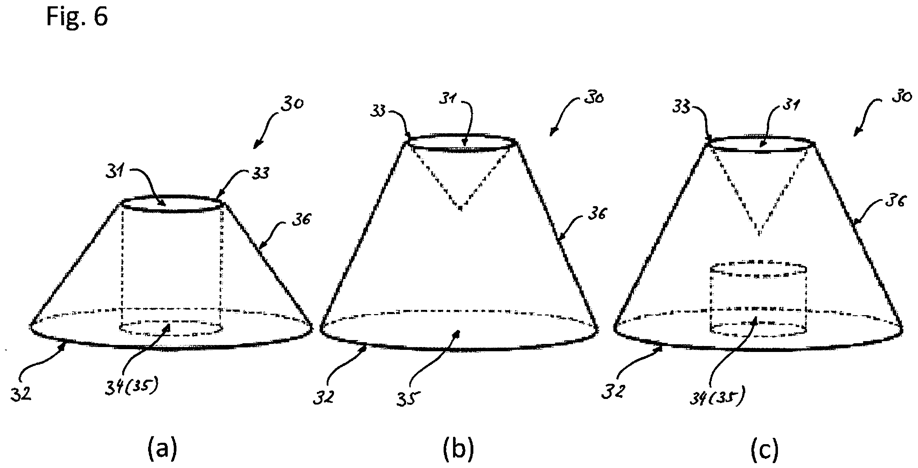

Die zweite Optik kann eine sich von einer die erste Optik aufnehmenden Öffnung aufweisenden Seite von der ersten Optik wegerstreckende und aufweitende Form aufweisen. Eine solche Form ist beispielsweise in Figur 6a oder Figur 6c gezeigt. Die zweite Optik bildet dann bevorzugt eine zu ersten Optik umgekehrte kegelstumpfförmige Form, welche bevorzugt in seiner der ersten Optik abgewandten Seite einen flächigen Bodenbereich aufweist, der zu der ersten Optik hin zu einem flächigen Stirnbereich zuläuft. "Flächig" bedeutet im Rahmen der Erfindung in der Regel, dass sich an einer entsprechenden Seite eine entsprechende geometrische Fläche wenigstens zwischen den begrenzenden Randbereichen derselben aufspannen lässt, auch wenn die besagte Seite eine Öffnung oder dergleichen aufweist.

Der Stirnbereich kann dabei die die erste Optik wenigstens teilweise aufnehmende Öffnung aufweisen. Die die erste Optik wenigstens teilweise aufnehmende Öffnung kann dabei zylindrisch oder auch kegelförmig bzw. konisch ausgebildet sein. Auch ist es zusätzlich denkbar, dass die Öffnung durchgehend durch die zweite Optik hindurch ausgebildet ist.

Gemäß einer bevorzugten Ausgestaltungsform bildet dabei der flächige Bodenbereich der zweiten Optik die Auskoppelfläche der Leuchtenoptik.

Erfindungsgemäß weist der Bodenbereich der zweiten Optik ferner eine Ausnehmung, vorzugsweise eine zentrale Ausnehmung, auf, welche in einem für die Lichtabgabe nicht-wirksamen Bereich vorgesehen ist. Diese Aussparung auf der Lichtaustrittsseite der Leuchtenoptik bzw. zweiten Optik dient bevorzugt einer Volumenoptimierung, so dass die Optik besser mit dem Spritzgussverfahren hergestellt werden kann und letztlich Herstellungskosten eingespart und Gewicht reduziert werden kann. Die Geometrie der zweiten Optik kann jedoch auch zu einer erneuten internen Totalreflexion genutzt werden; hierfür kann der zweiten Optik eine

weitere Optik nachgeschaltet werden. Vorrangig dient sie jedoch der Auskoppelung aus der Leuchtenoptik.

Gemäß einer bevorzugten Ausgestaltungsform können die erste Optik und die zweite Optik auch integral miteinander ausgebildet sein. Diese hat insbesondere herstellungs- und montagetechnische Vorteile, da die Optiken bereits im Herstellungsprozess optisch optimiert zueinander ausgerichtet werden können.

Gemäß einem weiteren Aspekt betrifft die Offenbarung auch ein Leuchtenoptiksystem, welches wenigstens zwei erfindungsgemäße Leuchtenoptiken aufweist. Die ersten Optiken und/oder die zweiten Optiken sind mittels Verbindungselementen miteinander verbunden. Gemäß einer bevorzugten Ausgestaltungsform sind wenigstens zwei Verbindungselemente vorgesehen, wobei in diesem Fall das erste Verbindungselement die ersten Optiken und das zweite Verbindungselement die zweiten Optiken trägt bzw. (fix) verbindet. Diese können somit separat bereitgestellt werden und in einer gewünschten Weise miteinander zusammengeführt werden, um das Leuchtenoptiksystem zu bilden.

Die Verbindungselemente können ferner Fixierelemente aufweisen, um mehrere Verbindungselemente miteinander zu verbinden. Dies insbesondere in der Art, dass eine definierte Positionierung der ersten Optiken mit den zweiten Optiken zur gezielten und gewünschten gerichteten Lichtabgabe bereitgestellt werden.

Es ist hierbei besonders bevorzugt denkbar, dass die Verbindungselemente und wahlweise auch die Fixierelemente mit den jeweiligen Optiken integral ausgebildet sind.

Gemäß einem weiteren Aspekt betrifft die Offenbarung ferner eine Leuchte, welche eine Leuchtenoptik gemäß der Erfindung bzw. ein Leuchtenoptiksystem aufweist. Ferner weist eine entsprechende Leuchte wenigstens ein Leuchtmittel zur Einkopplung von Licht in die erste(n) Optik(en) bzw. die Leuchtenoptik bzw. das Leuchtenoptiksystem auf.

Das Leuchtmittel kann bevorzugt von der ersten Optik, insbesondere der Lichteinkoppelfläche der ersten Optik, beabstandet vorgesehen sein. Auf diese Weise kann, beispielsweise wenn sich ein Luftspalt zwischen Leuchtmittel und erster Optik befindet, bereits beim Austritt des Lichts aus dem Leuchtmittel die erste Brechung des Lichts stattfinden, um somit das Licht gerade nicht auf dem für die Optik unwirksamen Bereich im Bereich des Fußes bzw. des Bodens des Strahlteilers/Kegels zu lenken. Somit kann das Licht gezielt auf den wirksamen Bereich an den vorbenannten Seitenflächen der ersten Optik gerichtet werden, an dem dann bevorzugt alles Licht, welches von dem Leuchtmittel abgegeben wird, totalreflektiert werden kann, wie dies zuvor bereits beschrieben wurde.

Weitere Vorteile, Ausgestaltungsformen und Ausführungsbeispiele werden im Folgenden anhand der Figuren der begleitenden Zeichnungen beschrieben. Es zeigen:
- Figur 1: eine erste Optik gemäß der vorliegenden Erfindung,
- Figur 2: einen CPC-Konzentrator gemäß dem Stand der Technik,
- Figur 3: die Lichtlenkung der optischen Systeme gemäß einer erfindungsgemäßen ersten Optik (Figur 3a), eines bekannten CPC-Konzentrators (Figur 3b) und einer bekannten TIR-Linse (Figur 3c),
- Figur 4: die Lichtlenkung unkontrollierten Lichts der optischen Systeme gemäß der erfindungsgemäßen ersten Optik (Figur 4a), des bekannten CPC-Konzentrators (Figur 4b) sowie der bekannten TIR-Linse (Figur 4c),
- Figur 5: eine erfindungsgemäße erste Optik mit Leuchtmittel im dargestellten Fokuspunkt und die zugehörige Lichtlenkung,
- Figuren 6a und 6c,: zwei Ausführungsformen einer erfindungsgemäßen zweiten Optik, Figur 6b, eine zweite Optik nicht gemäß der Erfindung.
- Figur 7: eine Leuchte mit erfindungsgemäßer ersten Optik, zweiten Optik und Leuchtmittel sowohl in einer Draufsicht (Figur 7a) als auch in einer perspektivischen Querschnittsansicht mit Lichtlenkung (Figur 7b),
- Figur 8: eine Leuchtenoptik gemäß einem weiteren Ausführungsbeispiel der Erfindung, und
- Figur 9: ein Leuchtenoptiksystem gemäß einem Ausführungsbeispiel der vorliegenden Offenbarung

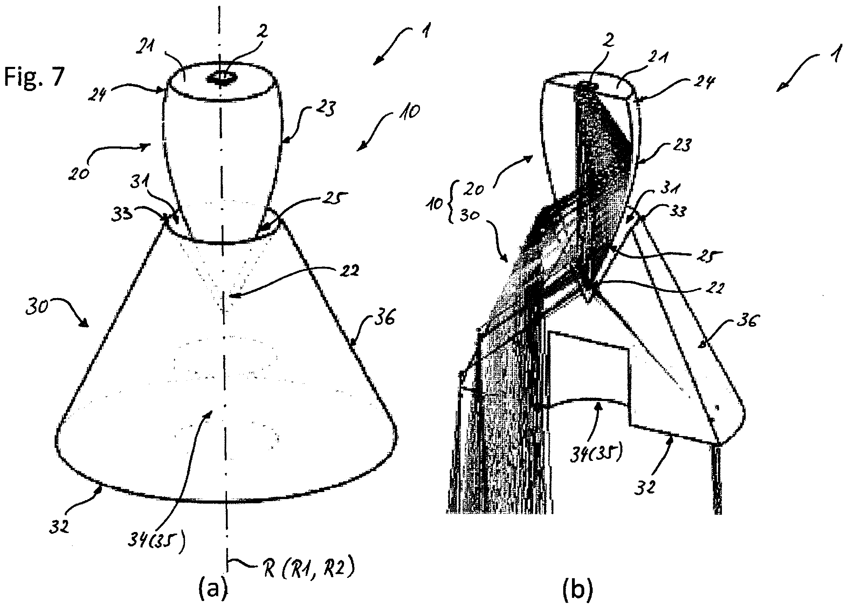

Figur 7 zeigt ein Ausführungsbeispiel einer Leuchte 1 gemäß der vorliegenden Offenbarung. Die Leuchte 1 weist dabei eine Leuchtenoptik 10 gemäß der vorliegenden Erfindung auf. Ferner weist die Leuchte 1 ein Leuchtmittel 2 zur Einkopplung von Licht in die Leuchtenoptik 10 auf. Das Leuchtmittel 2 kann dabei bevorzugt eine LED oder eine OLED sein, wobei die Erfindung hierauf nicht beschränkt ist.

Die Leuchtenoptik 10 weist eine erste Optik 20 sowie eine zweite Optik 30 auf, welche im Weiteren näher beschrieben werden.

Die erste Optik 20 ist beispielsweise auch in Figur 1 dargestellt. Figur 1 ist zu entnehmen, dass die erste Optik von einem flächigen Bodenbereich 21 weg erstreckend zu einer Spitze 22 hin zuläuft. Die erste Optik 20 weist ferner den Bodenbereich 21 mit der Spitze 22 verbindende Seitenfläche 23 auf. Wie in Figur 1 zu entnehmen ist, ist die Seitenfläche 23 bevorzugt rotationssymmetrisch ausgebildet. Wie dargestellt, weist die erste Optik 20 dazu eine im Wesentlichen kegelförmige Form auf. Auch andere Formen sind denkbar, beispielsweise lineare, rechteckige, quadratische oder mehreckige Formen, wobei die rotationssymmetrische Form zur Erzielung einer besonders geringen Strahldivergenz der Leuchtenoptik 10 bevorzugt ist.

Die erste Optik 20 kann bevorzugt vom Bodenbereich 21 zur Spitze 22 hin verlaufend eine parabelförmige oder kreisbogenförmige oder sonstige kurvenförmige Außenkontur aufweisen; also eine im Wesentliche konvexe Außenkontur. Dargestellt ist eine parabelförmige Außenkontur. Diese beschreibt letztlich auch die den Bodenbereich 21 mit der Spitze 22 verbindende(n) Seitenfläche(n) 23.

Die erste Optik 20 ist bevorzugt als Vollkörper ausgebildet. Sie bildet idealerweise einen Strahteiler, mit dem bevorzugt alles Licht, welches in die Leuchtenoptik 10 eingekoppelt wird, entsprechend teilt bzw. ,auffächert', so dass bevorzugt kein Direktlicht die erste Optik durchläuft und dann direkt die Leuchtenoptik 10 verlässt.

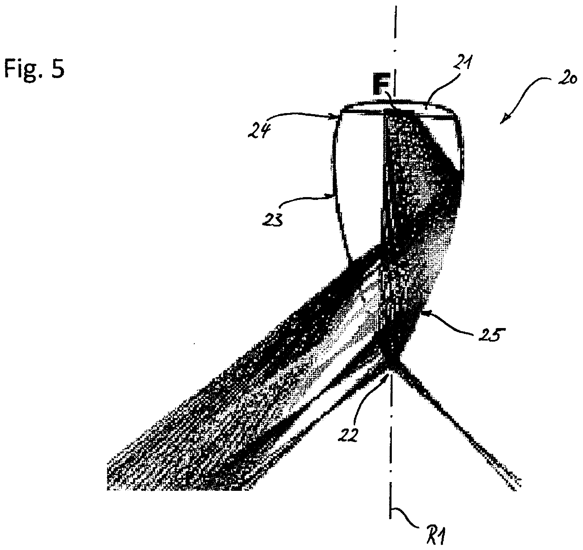

Ferner mit Verweis auf die Figuren 5 und 7 weist der Bodenbereich 21 der ersten Optik 20 eine Lichteinkoppelfläche zum Einkoppeln von Licht in das Leuchtensystem bzw. die Leuchtenoptik 10 auf. Die Seitenfläche(n) 23 ist (sind) dabei derart ausgebildet, dass vorzugsweise alles über den Bodenbereich 21 der ersten Optik 20 in diese eingekoppelte Licht an den Seitenflächen 23 totalreflektiert wird. Dies bevorzugt derart, dass das totalreflektierte Licht an den gegenüberliegenden Seitenflächen 23 der ersten Optik 20 aus dieser ausgekoppelt wird. Dies ist besonders bevorzugt in Figur 5 dargestellt und ergibt sich auch aus der Figur 7b. Wie der Figur 5 zu entnehmen ist, liegt der Fokuspunkt F der totalreflektierenden Seitenflächen 23 bevorzugt im Zentrum des Bodenbereichs 21; besonders bevorzugt als zuvor beschriebene Lichteinkoppelfläche. Dies bevorzugt in Kombination mit einer parabolischen Außenkontur der Seitenflächen 23 führt zu einer besonders effektiven Strahlteilung des gesamten in die erste Optik 20 eingekoppelten Lichts, wie dies in Figur 5 vereinfacht für den rechten Lichtanteil dargestellt ist. Der Fokuspunkt F der totalreflektierenden Seitenflächen 23 kann innerhalb oder auch außerhalb der ersten Optik 20 liegen. Dabei kann er ferner, wie beispielsweise in Figur 5 gezeigt, auf einer Längsachse, Mittelachse bzw. Rotationssymmetrieachse R1 der ersten Optik 20 oder auch abseits dieser Achse R1 liegen. Dies kann je nach gewünschter Lichtabgabe variiert werden.

Das Leuchtmittel 2 kann gemäß einer besonders bevorzugten Ausgestaltungsform von der ersten Optik 20 beabstandet vorgesehen sein; insbesondere von der Lichteinkoppelfläche der ersten Optik 20. Dies ist insbesondere deswegen vorteilhaft, da auf diese Weise bereits eine erste Lichtbrechung des Lichts nach Austritt aus dem Leuchtmittel 2 geschieht, um somit das Licht bereits vor dem Einkoppeln in die Leuchtenoptik 10 definiert zu brechen. Dies ist insbesondere dann von Vorteil, wenn die den Bodenbereich 21 mit der Spitze 22 verbindenden Seitenfläche 23 der ersten Optik 20 sich in einem Bereich 24 nahe der Bodenfläche 21 von der Bodenfläche 21 zur Spitze 22 hin aufweitend oder zylindrisch erstrecken. Dies ist beispielhaft der Figur 1 zu entnehmen. Eine solche Ausgestaltung im Fußbereich der hier dargestellt kegelförmigen ersten Optik 20 ist insbesondere aus verfahrenstechnischen Gründen bereitgestellt, um eine einfache Entformung der Optik bei deren Herstellung zu ermöglichen. Dieser Bereich 24 stellt bevorzugt einen optisch nicht-wirksamen Bereich dar, welcher aufgrund seiner geometrischen Ausgestaltung für eine gewünschte definierte Lichtlenkung nicht geeignet ist und somit möglichst vermieden werden sollte. Insofern bietet sich eine Lichtlenkung an, welche das Licht gezielt von diesen Bereichen 24 fernhält. Insofern ist eine Beabstandung eines Leuchtmittels 2 von der ersten Optik 20 mit bevorzugt dazwischenliegendem Luftspalt denkbar, um eine entsprechende Brechung des von dem Leuchtmittel 2 ausgehenden Lichtes zu erzielen, um somit eben den nicht-wirksamen optischen Bereich 24 in der Strahlführung zu vermeiden. Diese bevorzugte Strahlführung ist den Figuren 3a, 5 und 7b deutlich zu entnehmen.

Wieder zurückkommend zur Figur 7 weist die dargestellte Leuchte 1 bzw. die Leuchtenoptik 10 ferner die zweite Optik 30 auf. Diese Optik 30 weist eine Öffnung 31 auf, in die die erste Optik 20 wenigstens mit ihrer Spitze 22 hineinragt. Zwischen der Spitze 22 der ersten Optik 20 (genauer dem in die Öffnung 31 ragenden Bereich 25 der ersten Optik 20, welcher zugleich bevorzugt den Auskoppelbereich 25 der ersten Optik 20 definiert) und dem die Öffnung 31 begrenzenden Bereich der zweiten Optik 30 ist bevorzugt ein Abstand bereitgestellt, um somit eine definierte und gezielte Lichtführung bzw. Lichtlenkung zu ermöglichen.

Die zweite Optik 30 ist derart ausgebildet, um von der ersten Optik 20 ausgekoppeltes Licht in der Öffnung 31 einzukoppeln und entsprechend derart umzulenken, um das in die zweite Optik 30 eingekoppelte Licht gerichtet aus der zweiten Optik 30 abzugeben, wie dies Figur 7b zu entnehmen ist. Die Kombination der beiden erfindungsgemäßen Optiken 20, 30 führt somit im Wesentlichen zu einer Eliminierung eines unkontrollierten Licht(anteil)es, wie er beispielsweise bei CPC-Konzentratoren (vgl. Figur 4b) oder TIR-Optiken (vgl. Figur 4c) bekannt ist. Das über die erste Optik 20 in Form eines Strahlteilers vorzugsweise komplett aufgeteilte bzw. aufgefächerte Licht kann somit bevorzugt gänzlich über die zweite Optik 30 gezielt aufgefangen und gerichtet abgegeben werden. Durch die Vermeidung von direkten Lichtanteilen sowie die definierte Lichtlenkung des bevorzugt gesamten Lichtanteils ermöglicht das zweistufige System eine besonders geringe Strahldivergenz.

Die erste Optik 20 kann, wie die zweite Optik 30, auch als Vollkörper ausgebildet sein.

Die Umlenkung zur gerichteten Lichtabgabe aus der zweiten Optik 30 wird bevorzugt dadurch erreicht, dass die zweite Optik 30 mittels Totalreflexion eine entsprechende gerichtete Lichtabgabe des in diese Optik 30 einkoppelten Lichts ermöglicht. Dies ist beispielsweise der Lichtlenkung, wie in Figur 7b dargestellt, zu entnehmen.

Mögliche Ausgestaltungsformen der erfindungsgemäßen zweiten Optik 30 sind beispielsweise in den Figuren 6a und 6c gezeigt. Danach weist die zweite Optik 30 bevorzugt eine sich von einer die erste Optik 20 aufnehmenden Öffnung 31 aufweisenden Seite von der ersten Optik 20 weg erstreckende und aufweitende Form auf. Wie den Figuren 6a und 6c zu entnehmen ist, kann die zweiten Optik 30 folglich eine zur ersten Optik 20 umgekehrte kegelstrunkförmige Form aufweisen. Diese kann an seiner der ersten Optik 20 abgewandten Seite einen flächigen Bodenbereich 32 aufweisen, der zu der ersten Optik 20 hin zu einem flächigen Stirnbereich 33 zuläuft. Der flächige Stirnbereich 33 kann dabei den Eintritt in die Öffnung 31 bilden. Insbesondere weist der Stirnbereich 33 die die erste Optik 20 wenigstens teilweise aufnehmende Öffnung 31 auf. Diese erstreckt sich dann von dem Stirnbereich 33 zum Bodenbereich 32 hin. Bevorzugt ist die Form der Öffnung 31 in optischer und bevorzugt auch geometrischer Weise an die Form der ersten Optik 20 - wenigstens an den aufzunehmenden Teil 25 der ersten Optik 20 - angepasst. Die die erste Optik 20 wenigstens teilweise aufnehmende Öffnung 31 kann zylindrisch (vgl. Figur 6a) oder auch kegelförmig (vgl. Figur 6c) ausgebildet sein. Auch andere Ausgestaltungsformen sind denkbar.

Wie in Figur 6a gezeigt, kann die Öffnung 31 vorzugsweise durchgehend durch die zweite Optik 30 ausgebildet sein. Entscheidend ist dabei vor allem, dass die strukturellen Merkmale der zweiten Optik 30 derart erhalten bleiben, um das von der ersten Optik 20 abgegebene Licht entsprechend aufzunehmen (also einzukoppeln) und dann möglichst alles Licht entsprechend definiert umzulenken und gerichtet abzugeben.

Wie Figur 7b zu entnehmen ist, bildet der flächige Bodenbereich 32 der zweiten Optik 30 bevorzugt die Auskoppelfläche der Leuchtenoptik 10. Gemäß der Erfindung, wie beispielsweise in Figuren 6a und 6c sowie Figur 7 dargestellt, weist der Bodenbereich 32 der zweiten Optik 30 eine Ausnehmung 34 auf. Dabei handelt es sich bevorzugt um eine zentrale Ausnehmung 34, welche also bezüglich der Längsachse, Mittelachse bzw. Rotationssymmetrieachse R2 der zweiten Optik 30 mittig bzw. koaxial angeordnet ist. Diese Ausnehmung 34 dient insbesondere der Volumenoptimierung der zweiten Optik 30 und ist daher in einem für die Lichtabgabe nicht-wirksamen Bereich 35 der zweiten Optik 30 vorgesehen. Dies kann beispielsweise auch deutlich der Figur 7b entnommen werden, wonach die Ausnehmung 34 außerhalb der Strahlführung der Leuchtenoptik 10 liegt.

Die Achsen R1 und R2 sind bevorzugt koaxial vorgesehen und deckungsgleich mit einer entsprechenden Achse R der Leuchtenoptik 10.

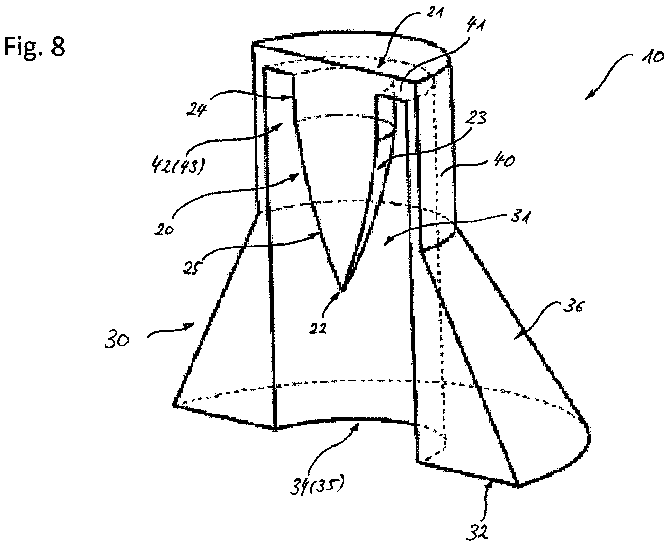

Gemäß einer bevorzugten Ausgestaltungsform können, wie beispielsweise in Figur 8 dargestellt, die erste Optik 20 und die zweite Optik 30 integral miteinander ausgebildet sein. Wie in Figur 8 dargestellt, erstreckt sich hierzu rückseitig von der zweiten Optik 30 ein zylindrischer Vorsatz 40, welcher in seinem von der zweiten Optik 30 beanstandeten Ende seitlich mit der ersten Optik 20 mittels eines Verbindungsbereichs bzw. -ringes 41 verbunden ist. Die erste Optik 20 erstreckt sich dabei in einen von dem Vorsprung 40 gebildeten Hohlraum 42, welcher sich wiederum in die in der zweiten Optik 30 vorgesehene Öffnung 31 erstreckt. Die erste Optik 20 ragt somit von dem Verbindungsbereich 41 durch den Hohlraum 42 bis in die Öffnung 31 der zweiten Optik 30 hinein, um somit eine Leuchtenoptik 10, wie zuvor bereits beschrieben, bereitzustellen. Die Lichtführung würde sich dann, wie beispielsweise auch in Figur 7b gezeigt, ergeben. Der zwischen dem Vorsprung 40 sowie dem der ersten Optik 20 sich ergebende Spalt 43 ist herstellungsbedingt gegeben und kann bevorzugt auf ein Mindestmaß reduziert sein. Die Geometrie der insbesondere für die Lichtführung nicht-wirksamen Bereiche (40-43) ist durch die Erfindung nicht beschränkt und kann im Wesentlichen beliebig ausgebildet sein, solange er die geforderte Lichtführung nicht beeinträchtigt.

Auch bei dieser Ausgestaltungsform ist zu erkennen, dass die erste Optik 20 in ihrem Fußbereich 24, also dem den Bodenbereich 21 zugewandten Bereich der Seitenwände 23, nicht die Kontur der kegelförmigen bzw. parabolförmigen Seitenwände 23 weiterführt, sondern vielmehr zylindrisch ausgebildet ist. Dies ist insbesondere deshalb vorgesehen, um eine einfache Entformung der Leuchtenoptik 10 bei deren Herstellung zu bewirken.

In einer nicht beanspruchten und besonders einfachen und vorliegend nicht dargestellten Ausgestaltungsform ist es auch denkbar, dass die zweite Optik als einfacher Reflektor ausgebildet ist, welcher im Wesentlichen die gleiche Form bzw. äußerliche Kontur wie die dargestellte zweite Optik 30 haben kann. Insbesondere sollte die Form eines entsprechenden Reflektors derart ausgebildet sein, um das von der ersten Optik 20 ausgekoppelte Licht in gewünschter Weise gerichtet umzulenken, um somit mit einer geringen Strahldivergenz eine besonders gerichtete Lichtabgabe zu ermöglichen. Die Einkopplung in die Öffnung 31 eines solchen Reflektors fällt in diesem Fall zusammen mit der Auskopplung des Lichtes aus der ersten Optik 20 und entspricht dann der Lichtabgabe in der bzw. die Öffnung des Reflektors.

Auch eine Kombination von Reflektor und Vollmaterial als zweite Optik 30 ist denkbar, in dem beispielsweise zur Erhöhung der Effizienz die zweite Optik 30 beispielsweise an seinen äußeren Seitenflächen 36 mit einem Reflektor bzw. Reflektormaterial versehen ist.

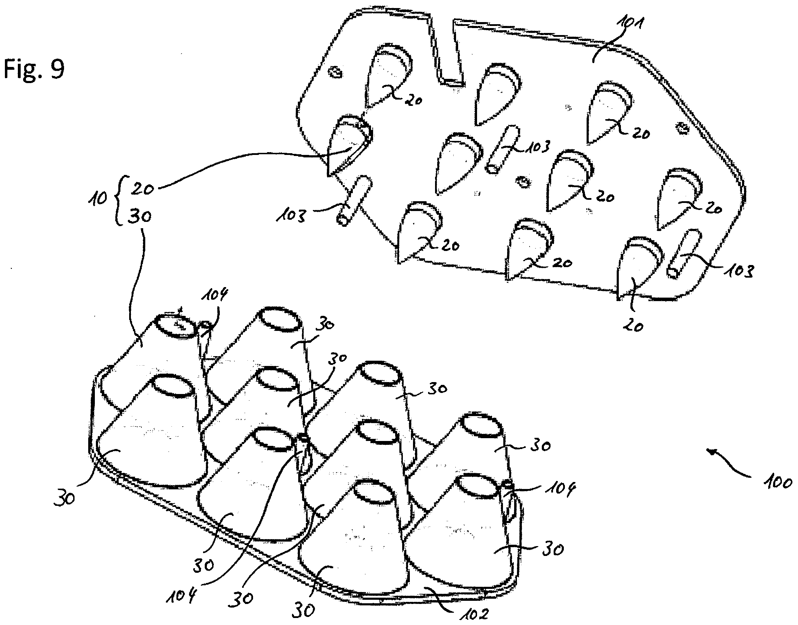

In Figur 9 ist eine weitere Ausgestaltungform dargestellt, welche ein Leuchtenoptiksystem 100 darstellt. Ein solches Leuchtenoptiksystem 100 weist bevorzugt wenigstens zwei Leuchtenoptiken 10 gemäß der vorliegenden Erfindung auf. Dabei sind wenigstens die ersten Optiken 20 und/oder wenigstens die zweiten Optiken 30 mittels Verbindungselementen 101, 102 miteinander verbunden. Diese Verbindungselemente 101, 102 sind bevorzugt, wie in Figur 9 dargestellt, als plattenartige Elemente ausgebildet, welche die jeweiligen Optiken 20, 30 tragen. Auch andere Ausgestaltungsformen sind selbstverständlich denkbar. Wie in Figur 9 dargestellt, können bevorzugt wenigstens zwei solcher Verbindungselemente 101, 102 bereitgestellt sein, wobei dann ein erstes Verbindungselement 101 die ersten Optiken 20 und ein zweites Verbindungselement 102 die zweiten Optiken 30 trägt.

Die Verbindungselemente 101, 102 können ferner Fixierelemente 103, 104 aufweisen, um eben mehrere Verbindungselemente 101, 102 miteinander zu verbinden. Mittels dieser Fixierelemente 103, 104 kann es ferner ermöglicht werden, eine definierte Positionierung der beiden Verbindungselemente 101, 102 bzw. Optiken 20, 30 zueinander zu ermöglichen.

In einer bevorzugten Ausgestaltungsform ist es auch hier denkbar, dass die jeweiligen Optiken 20, 30 mit dem ihm zugeordneten Verbindungselement 101, 102 integral ausgebildet sind. Auch das gesamte Leuchtenoptiksystem 100 kann insgesamt integral ausgebildet sein.

Die vorliegende Erfindung ist auf die vorhergehende Ausführungsbeispiele nicht beschränkt. Die Merkmale der einzelnen Ausführungsbeispiele sind in beliebiger Weise miteinander kombinierbar, sofern sie vom Gegenstand der nachfolgenden Ansprüche erfasst sind. Insbesondere ist die vorliegende Erfindung nicht auf bestimmte Materialien der Optiken und deren spezifische Geometrie beschränkt, solange sie die Aufgabe einer möglichst geringen Strahldivergenz bei definiert bzw. gewünscht gerichteter Lichtabgabe erfüllen.

## Patentansprüche

1. Leuchtenoptik (10) aufweisend:
eine erste Optik (20), welche von einem flächigen Bodenbereich (21) weg erstreckend zu einer Spitze (22) hin zuläuft,
eine zweite Optik (30), welche eine Öffnung (31) aufweist, in die die erste Optik (20) wenigstens mit ihrer Spitze (22) hineinragt und derart ausgebildet ist, um von der ersten Optik (20) ausgekoppeltes Licht in der Öffnung einzukoppeln und gerichtet aus der zweiten Optik (30) abzugeben,
**dadurch gekennzeichnet,**
**dass** ein Bodenbereich (32) der zweiten Optik (30) eine Ausnehmung (34), vorzugsweise eine zentrale Ausnehmung (34), aufweist, welche in einem für die Lichtabgabe nicht-wirksamen Bereich vorgesehen ist,
und **dass** die zweite Optik (30) als Vollkörper ausgebildet ist.

2. Leuchtenoptik (10) gemäß Anspruch 1, wobei die erste Optik (20) als Vollkörper gebildet ist, und/oder
wobei die erste Optik (20) als Strahlteiler ausgebildet ist, und/oder
wobei die erste Optik (20) im Wesentlichen kegelförmig ausgebildet ist.

3. Leuchtenoptik (10) gemäß einem der vorhergehenden Ansprüche, wobei die den Bodenbereich (21) mit der Spitze (22) verbindenden Seitenflächen (23) der ersten Optik (20) rotationssymmetrisch ausgebildet sind.

4. Leuchtenoptik (10) gemäß einem der vorhergehenden Ansprüche, wobei der Bodenbereich (21) der ersten Optik (20) eine Lichteinkoppelfläche zum Einkoppeln von Licht in die Leuchtenoptik (10) aufweist.

5. Leuchtenoptik (10) gemäß einem der vorhergehenden Ansprüche, wobei die den Bodenbereich (21) mit der Spitze (22) verbindenden Seitenflächen (23) der ersten Optik (20) derart ausgebildet sind, dass vorzugsweise alles über den Bodenbereich (21) der ersten Optik (20) in diese eingekoppelte Licht an den Seitenflächen (23) derart totalreflektiert wird, dass es an den jeweils gegenüberliegenden Seitenflächen (23) der ersten Optik (20) aus dieser ausgekoppelt wird,
wobei vorzugsweise der Fokuspunkt (F) der totalreflektierenden Seitenflächen (23) im Zentrum des Bodenbereichs (21) als Lichteinkoppelfläche liegt, und/oder
wobei vorzugsweise der Fokuspunkt (F) der totalreflektierenden Seitenflächen (23) innerhalb oder außerhalb der ersten Optik (20), vorzugsweise auf einer Rotationssymmetrieachse (R) derselben oder abseits der Rotationssymmetrieachse (R), liegt.

6. Leuchtenoptik (10) gemäß einem der vorhergehenden Ansprüche, wobei die erste Optik (20) vom Bodenbereich (21) zur Spitze (22) hin verlaufend eine parabelförmige oder kreisbogenförmige oder eine sonstige kurvenförmige Außenkontur aufweist.

7. Leuchtenoptik (10) gemäß einem der vorhergehenden Ansprüche, wobei die den Bodenbereich (21) mit der Spitze (22) verbindenden Seitenflächen (23) der ersten Optik (20) sich in einem Bereich nahe dem Bodenbereich (21) von dem Bodenbereich (21) zur Spitze (22) hin aufweitend oder zylindrisch erstrecken.

8. Leuchtenoptik (10) gemäß einem der vorhergehenden Ansprüche, wobei zwischen der Spitze (22, 25) der ersten Optik (20) und dem die Öffnung (31) begrenzenden Bereich der zweiten Optik (30) ein Abstand bereitgestellt ist.

9. Leuchtenoptik (10) gemäß einem der vorhergehenden Ansprüche, wobei die zweite Optik (30) derart ausgebildet ist, um das Licht mittels Reflexion oder Totalreflexion zur gerichteten Lichtabgabe aus der zweiten Optik (30) umzulenken.

10. Leuchtenoptik (10) gemäß einem der vorhergehenden Ansprüche, wobei die zweite Optik (30) eine sich von einer die erste Optik (20) aufnehmenden Öffnung (31) aufweisenden Seite von der ersten Optik (20) weg erstreckende und aufweitende Form aufweist.

11. Leuchtenoptik (10) gemäß einem der vorhergehenden Ansprüche, wobei die zweite Optik (30) eine zur ersten Optik (20) umgekehrte kegelstumpfförmige Form aufweist, welche an seiner der ersten Optik (20) abgewandten Seite einen flächigen Bodenbereich (32) aufweist, der zu der ersten Optik (20) hin zu einem flächigen Stirnbereich (33) zuläuft, wobei vorzugsweise der Stirnbereich (33) die die erste Optik (20) wenigstens teilweise aufnehmende Öffnung (31) aufweist.

12. Leuchtenoptik (10) gemäß einem der vorhergehenden Ansprüche, wobei die die erste Optik (20) wenigstens teilweise aufnehmende Öffnung (31) zylindrisch oder kegelförmig ausgebildet ist, wobei die Öffnung (31) vorzugsweise durchgehend durch die zweite Optik (30) ausgebildet ist.

13. Leuchtenoptik (10) gemäß einem der vorhergehenden Ansprüche, wobei der flächige Bodenbereich (32) der zweiten Optik (30) die Auskoppelfläche der Leuchtenoptik (10) bildet.

14. Leuchtenoptik (10) gemäß einem der vorhergehenden Ansprüche, wobei die erste Optik (20) und die zweite Optik (30) integral miteinander ausgebildet sind.

## Claims

1. Lighting optics (10) comprising:
first optics (20), which extend from a planar base region (21) to a tip (22),
second optics (30), which comprise an opening (31) into which the first optics (20) project at least with the tip (22) thereof and which are configured to couple light decoupled by the first optics (20) into the opening and emit it from the second optics (30) in a directed manner, **characterized in that**
a base region (32) of the second optics (30) comprises a recess (34), preferably a central recess (34), which is provided in a region that is not effective for the emission of light,
and that the second optics (30) are designed as a solid body.

2. Lighting optics (10) according to Claim 1, wherein the first optics (20) are constructed as a solid body, and/or
wherein the first optics (20) are configured as a beam splitter and/or wherein the first optics (20) are substantially cone-shaped.

3. Lighting optics (10) according to any one of the preceding claims, wherein the lateral surfaces (23) of the first optics (20) connecting the base region (21) with the tip (22) are rotationally symmetrical.

4. Lighting optics (10) according to any one of the preceding claims, wherein the base region (21) of the first optics (20) comprises a light in-coupling surface for coupling light into the lighting optics (10).

5. Lighting optics (10) according to any one of the preceding claims, wherein the lateral surfaces (23) of the first optics (20) connecting the base region (21) with the tip (22) are configured such that all of the light coupled into the first optics (20) via the base region (21) is preferably totally reflected on the lateral surfaces (23), in such a way that it is coupled out of the first optics (20) on the respective opposite lateral surfaces (23) of said first optics,
wherein the focal point (F) of the totally reflecting lateral surfaces (23) is preferably located in the center of the base region (21) as a light in-coupling surface, and/or
wherein the focal point (F) of the totally reflecting lateral surfaces (23) is preferably located within or outside of the first optics (20), preferably on an axis of rotational symmetry (R) of said first optics or off the axis of rotational symmetry (R).

6. Lighting optics (10) according to any one of the preceding claims, wherein, extending from the base region (21) toward the tip (22), the first optics (20) comprise a parabolic or arc-shaped or otherwise curved outer contour.

7. Lighting optics (10) according to any one of the preceding claims, wherein, in a region near the base region (21), the lateral surfaces (23) of the first optics (20) connecting the base region (21) with the tip (22) extend from the base region (21) to the tip (22) in a widening or cylindrical manner.

8. Lighting optics (10) according to any one of the preceding claims, wherein a gap is provided between the tip (22, 25) of the first optics (20) and the region of the second optics (30) which delimits the opening (31).

9. Lighting optics (10) according to any one of the preceding claims, wherein the second optics (30) are configured to deflect the light by means of reflection or total reflection for the directed emission of light from the second optics (30) .

10. Lighting optics (10) according to any one of the preceding claims, wherein, on a side comprising an opening (31) which accommodates the first optics (20), the second optics (30) have a form which extends away from the first optics (20) and widens.

11. Lighting optics (10) according to any one of the preceding claims, wherein the second optics (30) have a frustoconical form which is inverted relative to the first optics (20) and, on its side facing away from the first optics (20), has a planar base region (32) which tapers in the direction of the first optics (20) to a planar end region (33),
wherein the end region (33) preferably comprises the opening (31) which at least partially accommodates the first optics (20) .

12. Lighting optics (10) according to any one of the preceding claims, wherein the opening (31) which at least partially accommodates the first optics (20) is cylindrical or cone-shaped, wherein the opening (31) is preferably configured in such a way that it extends continuously through the second optics (30).

13. Lighting optics (10) according to any one of the preceding claims, wherein the planar base region (32) of the second optics (30) forms the decoupling surface of the lighting optics (10).

14. Lighting optics (10) according to any one of the preceding claims, wherein the first optics (20) and the second optics (30) are integrally formed with one another.

## Revendications

1. Optique d'éclairage (10) présentant :
une première optique (20) s'étendant d'une zone de base plane (21) pour se terminer en une pointe (22),
une deuxième optique (30) présentant une ouverture (31) dans laquelle fait saillie la première optique (20), au moins par sa pointe (22), et étant conçue pour injecter dans l'ouverture la lumière découplée par la première optique (20) et pour l'émettre, de façon dirigée, à partir de la deuxième optique (30), **caractérisée en ce que**
une zone de base (32) de la deuxième optique (30) présente un évidement (34), de préférence un évidement central (34), ménagé dans une zone non efficace quant à l'émission de lumière,
et **en ce que** la deuxième optique (30) est conçue sous la forme d'un corps plein.

2. Optique d'éclairage (10) selon la revendication 1, dans laquelle la première optique (20) se présente sous la forme d'un corps plein, et/ou
dans laquelle la première optique (20) est conçue sous la forme d'un diviseur de faisceau, et/ou dans laquelle la première optique (20) est de forme sensiblement conique.

3. Optique d'éclairage (10) selon l'une des revendications précédentes, dans laquelle les surfaces latérales (23) de la première optique (20) qui relient la zone de base (21) à la pointe (22) sont symétriques en rotation.

4. Optique d'éclairage (10) selon l'une des revendications précédentes, dans laquelle la zone de base (21) de la première optique (20) présente une surface d'injection de lumière permettant d'injecter de la lumière dans l'optique d'éclairage (10).

5. Optique d'éclairage (10) selon l'une des revendications précédentes, dans laquelle les surfaces latérales (23) de la première optique (20) qui relient la zone de base (21) à la pointe (22) sont conçues de manière que de préférence la totalité de la lumière injectée dans la première optique (20) par sa zone de base (21) soit totalement réfléchie sur les surfaces latérales (23) de façon à être découplée au niveau des surfaces latérales (23) opposées respectives de ladite première optique (20),
dans laquelle le point de focalisation (F) des surfaces latérales (23) à réflexion totale se situe au centre de la zone de base (21) et représente une surface d'injection de lumière, et/ou
dans laquelle de préférence le point de focalisation (F) des surfaces latérales (23) à réflexion totale se situe à l'intérieur ou à l'extérieur de la première optique (20), de préférence sur un axe de symétrie de rotation (R) de cette dernière ou à l'écart de l'axe de symétrie de rotation (R).

6. Optique d'éclairage (10) selon l'une des revendications précédentes, dans laquelle la première optique (20) présente, de la zone de base (21) à la pointe (22), un contour extérieur de forme parabolique, en forme d'arc de cercle ou autre configuration arquée.

7. Optique d'éclairage (10) selon l'une des revendications précédentes, dans laquelle, à proximité de la zone de base (21), les surfaces latérales (23) de la première optique (20), qui relient la zone de base (21) à la pointe (22), vont en s'élargissant ou s'étendent de façon cylindrique en direction de la pointe (22) à partir de la zone de base (21).

8. Optique d'éclairage (10) selon l'une des revendications précédentes, dans laquelle un espace est prévu entre la pointe (22, 25) de la première optique (20) et la zone de la deuxième optique (30) qui délimite l'ouverture (31).

9. Optique d'éclairage (10) selon l'une des revendications précédentes, dans laquelle la deuxième optique (30) est conçue pour rediriger la lumière par réflexion ou réflexion totale pour créer une émission dirigée de lumière à partir de la deuxième optique (30).

10. Optique d'éclairage (10) selon l'une des revendications précédentes, dans laquelle la deuxième optique (30) a une forme allant en s'élargissant en s'éloignant de la première optique (20) à partir d'un côté présentant l'ouverture (31) de réception de la première optique (20).

11. Optique d'éclairage (10) selon l'une des revendications précédentes, dans laquelle la deuxième optique (30) présente une forme tronconique qui est inverse de celle de la première optique (20) et qui possède une zone de base plane (32) sur son côté opposé à la première optique (20), laquelle va en rétrécissant vers la première optique (20) pour former une zone frontale plane (33),
ladite zone frontale (33) présentant de préférence l'ouverture (31) de réception au moins partielle de la première optique (20).

12. Optique d'éclairage (10) selon l'une des revendications précédentes, dans laquelle l'ouverture (31) de réception au moins partielle de la première optique (20) est cylindrique ou conique, ladite ouverture (31) traversant de préférence en continu la deuxième optique (30).

13. Optique d'éclairage (10) selon l'une des revendications précédentes, dans laquelle la zone de base plane (32) de la deuxième optique (30) forme la surface de découplage de l'optique d'éclairage (10).

14. Optique d'éclairage (10) selon l'une des revendications précédentes, dans laquelle la première optique (20) et la deuxième optique (30) sont formées d'un seul tenant.
